# EUROPEAN PATENT APPLICATION

(11) **EP 3 024 167 A1**
(43) Date of publication of application: **25.05.2016**
(21) Application number: 14460089.7
(22) Date of filing: 19.11.2014
(51) Int. Cl.: H04L 9/00, H04L 9/32

(54) **Method and apparatus for automating selection of certificate management policies during issuance of a certificate**

(71) Applicant: Motorola Solutions, Inc., Schaumburg IL 60196 (US)
(72) Inventor: Turner, Steven K., Cary, IL 60013-9774 (US); Boerger, Mark A., Plantation, FL 33322 (US); Grzesik, Andrzej, 43-600 Jaworzno (PL); Himawan, Erwin, Chicago, IL 60659 (US); Kruegel, Chris A., Plainfield, IL 60585 (US); Metke, Anthony R., Naperville, IL 60563 (US); Thomas, Shanthi E., Hoffman Estates, IL 60010 (US)
(74) Representative: Palka, Grazyna

(57) **Abstract**

A Public Key Infrastructure (PKI) device receives a certificate signing request (CSR) from an end entity. The PKI device obtains at least one of: a controlling attribute of at least one PKI device associated with processing of the certificate signing request and a controlling attribute associated with the CSR. The PKI device obtains an end entity policy object (EEPO) to be associated with the end entity based on at least one obtained controlling attribute. Based on the obtained EEPO, the PKI device determines at least one attribute and at least one value associated with the attribute this is to be included in a certificate and issues, to the end entity, the certificate including the at least one attribute.

## Description

### BACKGROUND OF THE INVENTION

In large communication systems, public key certificates may be used for access control. For example, public key certificates may be used to control who is authorized to access certain services. To ensure that proper access is granted via a certificate, subsequent to receiving a certificate signing request (CSR) from an end entity, a certificate authority (CA) or another Public Key Infrastructure (PKI) device associated with the CA (for example, a registration authority (RA)) has to apply one or more correct certificate management policies to the certificate issued in response to the CSR. The certificate management policies are identified by certificate policy object identifiers (CP OIDs). As such, a main aspect of certificate issuance and management is to ensure that the each certificate issued includes correct attributes, such as CP OIDs, validity dates, subject distinguished names and other attributes used for authorization.

The PKI X.509 standard specifies, among other things, standard formats for public key certificates. The contents of and behaviors associated with the management and use of a digital certificate in an end entity are determined by factors including, for example, an assurance level and capabilities of a certificate subject and assurance level(s) of PKI device(s) that signed and/or approved a particular CSR. The certificate subject may be a user, a device, or an organization. Each assurance level is associated with a predefined set of requirements. For instance, if a device is classified as being at a high assurance level, the device must include those predefined characteristics required at the high assurance level, including, for example, the presence of a Hardware Security Module (HSM). The assurance level of a user may be based on, for example, the user's rank, role, and/or length of time with an organization.

PKI infrastructure typically includes a CA which issues certificates and one or more RAs which, among other things, approve certificate requests. Various elements of the CA and RA may be implemented in separate physical hardware. For example, a CA and/or an RA may rely on a separate HSM for executing cryptography or other critical functions. In such cases, the CA and/or RA are considered to include the corresponding HSM, or when appropriate a logical partition of the HSM.

Certificates are typically issued by the CA in response to receiving a CSR. Prior to the CA issuing the certificate, a specific RA may approve the CSR. In some cases, an RA which is determined by the CA to have the authority to approve a given type of CSR may approve the CSR prior to the CA issuing a certificate in response to the CSR. In some instances, two or more RAs may approve the CSR, where, for example, a first RA may approve a given CSR before a second RA is allowed process the CSR and thereafter present the CSR to the CA for the CA to issue a certificate in response to the CSR. When an RA approves the CSR, the approving RA may indicate the approval by generating and adding a digital signature to the CSR. The RA digital signature may be generated using a private key associated with the RA. The RA may replace or add attributes to a CSR before signing the CSR.

The term attribute, as described herein, may refer to any element of a certificate or CSR. An attribute in a certificate may include a type, length, and value. Non-limiting examples of attributes may include a subject distinguished name (or a component of the subject distinguished name, for example, a common name, an organization, or an organizational unit), a certificate policy, a subject alternate name, an extended key usage, private certificate extensions, or any other commonly known or standard field of an X.509 certificate. Some attributes may include a numerical value, a text value, and/or a value known as an object ID (OID), where an OID may be a string of digits known to represent a particular attribute value. For example, an OID may be used to define a certificate policy, where a string of digits such as "1.2.3.4.5.99.101" may be assigned to a set of requirements placed on a PKI or PKI device when issuing a certificate containing the particular certificate policy (CP) OID.

In issuing a certificate in response to a CSR, the assurance level, rank and/or role of the requesting end entity and/or the assurance levels of the PKI devices processing the CSR determine which of one or more CP OIDs, extensions, and attributes are to be included in the certificate. The name of a certificate subject and issuer, CP OIDs, extensions, and attributes are only guaranteed to be captured in the issued certificate if the correct certificate management policies are selected and applied by PKI device(s). Non limiting examples of certificate management policies include policies for authenticating a certificate subject, selecting the attributes, and determining the level of assurance of the certificate. The role of the certificate subject in an organization and/or the applications using the certificate are considered in selecting attributes any extensions to be included in the certificate. Non-limiting examples of the role the certificate subject in an organization may include a supervisor, technician, security officer, or director. Non-limiting examples of applications using the certificate may include applications for accessing a web server, applications for accessing a virtual private network, internet protocol (IP) security applications, single sign on applications, and client identification applications. However, current management schemes for issuing a large number of X.509 certificates to fulfill a varied set of assurance needs are either manual and labor intensive processes or are inflexible processes.

Accordingly, there is a need for method and apparatus for automating selection of certificate management policies during issuance of a certificate.

### BRIEF DESCRIPTION OF THE SEVERAL VIEWS OF THE DRAWINGS

The accompanying figures, where like reference numerals refer to identical or functionally similar elements throughout the separate views, together with the detailed description below, are incorporated in and form part of the specification, and serve to further illustrate embodiments of concepts that include the claimed invention, and explain various principles and advantages of those embodiments.
FIG. 1 is a block diagram of a system operating in accordance with some embodiments.
FIG. 2 is a block diagram of a public key infrastructure device used in accordance with some embodiments.
FIG. 3 is a flowchart of a method for automating selection of certificate management policies when issuing a certificate in accordance with some embodiments.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of embodiments of the present invention.

The apparatus and method components have been represented where appropriate by conventional symbols in the drawings, showing only those specific details that are pertinent to understanding the embodiments of the present invention so as not to obscure the disclosure with details that will be readily apparent to those of ordinary skill in the art having the benefit of the description herein.

### DETAILED DESCRIPTION OF THE INVENTION

Some embodiments are directed to apparatuses and method for automating selection of certificate management policies when issuing a certificate. A Public Key Infrastructure (PKI) device receives a certificate signing request (CSR) from an end entity. The PKI device obtains at least one of: a controlling attribute of at least one PKI device associated with processing of the certificate signing request and a controlling attribute associated with the CSR. The PKI device obtains an end entity policy object (EEPO) to be associated with the end entity based on at least one obtained controlling attribute. Based on the obtained EEPO, the PKI device determines at least one attribute and at least one value associated with the attribute this is to be included in a certificate and issues, to the end entity, the certificate including the at least one attribute.

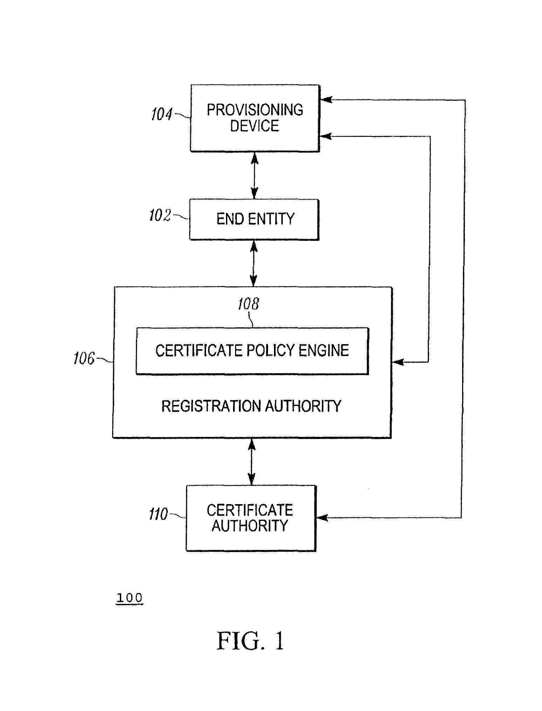

FIG. 1 is a block diagram of a system 100 operating in accordance with some embodiments. System 100 includes an end entity/requestor 102 that is configured to request a certificate from Public Key Infrastructure (PKI). End entity 102 may be any computing device, for example, a laptop, a smart card, a two way radio, another type of mobile or portable radio, or a smart phone that is configured to request a certificate from the PKI and to use a certificate issued by the PKI. An enrollment process of end entity 102 receiving the requested certificate from the PKI involves a set of trusted operations. For example, during initial enrollment of end entity 102 with the PKI, a trust relationship may be established between end entity 102 and a provisioning authority device 104 (also referred to herein as provisioning device 104). Provisioning device 104 is a PKI device with an established trust relationship with another PKI device, for example, a registration authority (RA) device 106 (also referred to herein as registration device 106, or RA 106) and/or an issuing or root certificate authority (CA) device 110 (also referred to herein as CA 110).

Provisioning device 104 may be, for example, a handheld device or laptop. In an embodiment, provisioning device 104 may be a type of RA that can be used to perform an initial vetting of a certificate signing request (CSR). It should be noted that the PKI may include one or more provisioning devices 104, one or more RAs 106, and one or more CAs 110. Only one of each of provisioning device 104, RA 106, and CA 110 is shown for ease of illustration.

Prior to sending a CSR, to request a certificate, to a PKI device with whom end entity 102 does not have a pre-established trust relationship, end entity 102 may send the CSR to provisioning device 104. End entity 102 is configured to have a pre-established trust relationship with provisioning device 104. The CSR may be a request associated with a certificate. For example, the CSR may be a request for a new certificate, a request for a rekeyed certificate, or a request for a renewed certificate. Subsequent to receiving the CSR, provisioning device 104 may digitally sign the CSR and return the signed CSR to end entity 102. End entity 102 may thereafter send the signed CSR to a PKI device that does not have a pre-established trust relationship with end entity 102. For example, end entity 102 may send the signed CSR to RA 106, i.e., a PKI device that performs certificate enrollment request vetting functions on behalf of an issuing CA 110.

RA 106 uses the signature of provisioning device 104 on the CSR in determining whether or not the CSR is to be trusted and to establish a trust relationship with end entity 102. In response to validating the CSR and subsequent to performing the certificate enrollment request vetting functions on behalf of CA 110, RA 106 forwards the CSR with attributes to be included in a certificate to CA 110. CA 110 issues the certificate with the attributes to end entity 102.

RA 106 includes a certificate policy engine 108 for determining at least some of the contents of the certificate that is to be issued to end entity 102 by CA 110 in response to the CSR. Prior to RA 106 sending the signed CSR to CA 110, RA 106 determines the contents to be included in the signed CSR. For example, certificate policy engine 108 in RA 106 obtains an end entity policy object (EEPO), either by generating the EEPO or retrieving the EEPO from a database of previously defined EEPOs. The EEPOs may be stored on a PKI device and/or on an end entity.

The EEPO is an optionally signed object used by end entities and PKI devices to determine how a certificate is managed and used. The EEPO may be signed by an EEPO issuer, for example, RA 106 or CA 110. Certificate management includes, but is not limited to, certificate enrollment, renewal, revocation, and destruction. Therefore, the EEPO may include parameters which indicate, to the subject of the certificate, how and when the certificate may be used, renewed, rekeyed, revoked, and destroyed. During certificate enrollment, certificate management may include determination and population of specific attributes in the certificate. During usage, certificate management may include authentication and authorization behaviors associated with service(s) enabled by the certificate. Accordingly, the EEPO may be used by an end entity and/or a certificate-enabled component to determine a portion of the contents of a certificate during enrollment, renewal, or rekeying of the certificate. The EEPO may further include attributes of a certificate that are to be used when validating a certificate from another end entity.

The attributes of a requested certificate that may be determined by selection of the EEPO include, for example, Certificate Policy Object Identifiers (CP OIDs), a validity period, a subject name, a key usage, an extended key usage, and other attributes or extensions that can further be used by a relying party to determine the applicability of a certificate for a given purpose or for accessing a given service. When end entity 102 is a relying party, for the purpose of authenticating or granting service access, the EEPO may also include parameters used to determine which certificates end entity 102 can accept from other end entities. During an exchange, any relying party may have access to any assurance level encoded in the certificate and can make a decision concerning a level of trust encoded in the certificate.

In selecting the EEPO, certificate policy engine 108 accesses one or more data structures with a given attribute. For example, certificate policy engine 108 may access an array (for example, a one-dimensional array or a multi-dimensional array) that may be indexed using at least one controlling attribute and/or another attribute. The controlling attribute(s) used to access the data structure may be obtained from one or more PKI devices associated with processing of the CSR and/or the controlling attributes(s) may be obtained from the CSR. In one example, a multi-dimensional array may be indexed using controlling attributes(s) associated with the CSR received from end entity 102, a controlling attribute assigned to at least one PKI device associated with processing of the CSR (i.e., a controlling attribute assigned in a certificate of provisioning device 104 (i.e., the PKI device that signed the CSR), a controlling attribute assigned in a certificate of RA 106 (i.e., the PKI device performing the vetting functions and that is currently processing the CSR), and/or a controlling attribute assigned to issuing CA 110 (i.e., a device which issues the certificate)). The PKI device(s) that previously processed the CSR are referred to herein as predecessor PKI device(s), the PKI device that is currently processing the CSR is referred to herein as a current PKI device, and the PKI device that will subsequently process the CSR is referred to herein as a future PKI device.

A controlling attribute may be, for example, a CP OID that identifies a certificate policy and a private extension attribute, and the controlling attribute is provided as input to the EEPO. Based on the controlling attributes of the CSR and/or the controlling attribute assigned to at least one PKI device associated with processing of the CSR, RA 106 obtains the EEPO to be associated with end entity 102. Therefore, when selecting the EEPO, certificate policy engine 108 may take into account the certificate policy associated with the CSR received from end entity 102, the certificate policy of provisioning device 104 (i.e., a predecessor PKI device), the certificate policy of registration authority 106 (i.e., the current PKI device), and/or the certificate policy of CA 110 (i.e., the future PKI device). This multi-dimensional accessing (i.e., indexing the array with controlling attribute(s) from different entities) by the certificate policy engine 108 enables the certificate policy engine 108 to assign the EEPO for end entity 102 based on the differing assurance levels of end entity 102, provisioning device 104, registration authority 106, and CA 110. RA 106 determines, based on the obtained EEPO, at least one attribute (i.e., a certificate attribute) and at least one value associated with the at least one certificate attribute that is to be included in a certificate. CA 110 later issues a certificate including the certificate attribute to the end entity

In one embodiment, the CSR may include controlling attributes identifying a CP OID and a private certificate extension, wherein the private certificate extension identifies at least one of an end entity type, a service type, and a provisioning device type. Subsequent to the certificate policy engine 108 determining the EEPO, the EEPO may be used to determine certificate use and the management of the certificate throughout the lifecycle of the certificate. For instance, during enrollment, the EEPO may be used to determine population of specific certificate attributes and corresponding certificate attribute values in a resulting certificate. The attributes included in the certificate determine, for example, the certificate's uses, cryptographic characteristics (for example, a cryptographic algorithm or a key length), lifetime/duration; and any constraints. Non-limiting examples of the constraints may include a name constraint and path length constraint.

The EEPO selected by certificate policy engine 108 also may be transferred to, and used by, end entity 102 to determine certificate management behaviors. The EEPO also may include an address or a location of the issuing CA. Non-limiting examples of the issuing CA address or location include a uniform resource locator (URL) of the CA or an Internet Protocol (IP) address of the CA.

Although certificate policy engine 108 is shown in RA 106, certificate policy engine 108 may be located in, for example, CA 110, RA 106, or provisioning device 104, or it may be distributed across two or more of such PKI devices. The PKI device(s) in which certificate policy engine 108 is located may determine which controlling attribute of end entity 102 to consider in connection with the controlling attributes in a certificate for which the PKI device is the subject or which controlling attribute of end entity 102 to consider in connection with an EEPO issued to the PKI device. For instance, provisioning device 104 may determine that because the certificate issued to it has a low assurance policy, the controlling attribute of the CSR that the provisioning device is processing must indicate low assurance as well. In one embodiment, the controlling attributes are known to possess scalar properties such as magnitude or order. In this manner, a PKI device may determine that the controlling attribute that the PKI device associates with a particular CSR may include a controlling attribute equal to or less than the controlling attribute in PKI device's own certificate.

As noted above, the attributes of a requested certificate that may be determined by selection of the EEPO include, for example, Certificate Policy Object Identifiers (CP OIDs), a validity period, a subject name, a key usage, an extended key usage, and other attributes or extensions that can further be used by a relying party to determine the applicability of a certificate for a given purpose or for accessing a given service. Accordingly when the CP OID is a controlling attribute, the issued certificate may include the controlling attribute and a second attribute, for example, a validity period, a subject name, a key usage, an extended key usage, and other attributes or extensions that can further be used by a relying party to determine the applicability of a certificate for a given purpose or for accessing a given service.

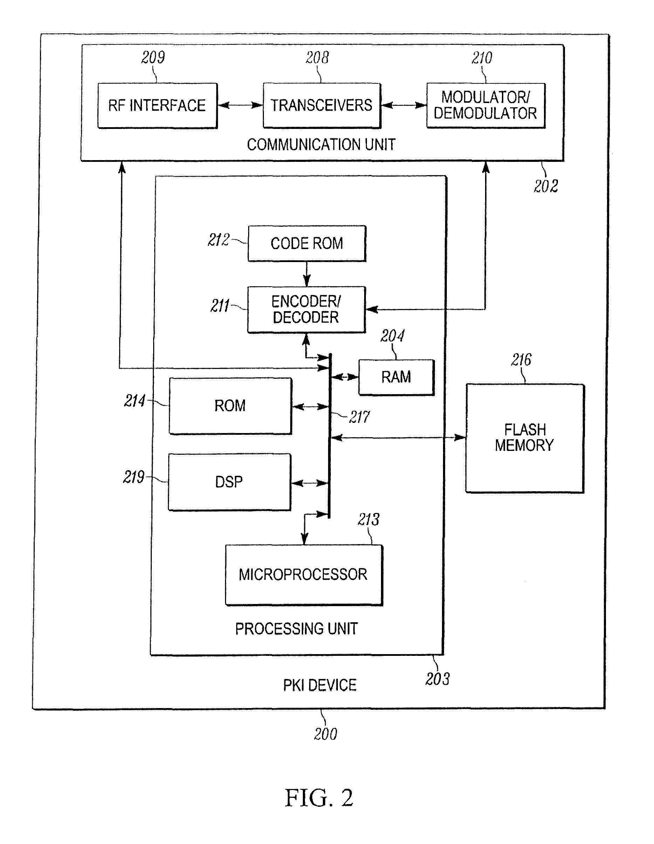

FIG. 2 is a block diagram of a public key infrastructure device 200, such as provisioning device 104, RA 106 or CA 110, used in accordance with some embodiments. Communication device 200, for example, may include a communications unit 202 coupled to a common data and address bus 217 of a processor 203. Communication device 200 may also include an input unit (e.g., keypad, pointing device, etc.) (not shown), an output transducer unit (e.g., speaker) (not shown), an input transducer unit (e.g., a microphone) (MIC) (not shown), and a display screen(not shown), each coupled to be in communication with the processor 203.

The processor 203 may include, that is, implement, an encoder/decoder 211 with an associated code read-only memory (ROM) 212 for storing data for encoding and decoding voice, data, control, or other signals that may be transmitted or received by communication device 200. The processor 203 may further include one or more of a microprocessor 213 and digital signal processor (DSP) 219 coupled, by the common data and address bus 217, to the encoder/decoder 211 and to one or more memory devices, such as a ROM 214, a random access memory (RAM) 204, and a static memory 216. One or more of ROM 214, RAM 204 and flash memory 216 may be included as part of processor 203 or may be separate from, and coupled to, the processor 203. The encoder/decoder 211 may be implemented by microprocessor 213 or DSP 219, or may be implemented by a separate component of the processor 203 and coupled to other components of the processor 203 via bus 217.

Communications unit 202 may include an RF interface 209 configurable to communicate with network components, and other user equipment within its communication range. Communications unit 202 may include one or more broadband and/or narrowband transceivers 208, such as an Long Term Evolution (LTE) transceiver, a Third Generation (3G) (3GGP or 3GGP2) transceiver, an Association of Public Safety Communication Officials (APCO) Project 25 (P25), transceiver, a Digital Mobile Radio (DMR) transceiver, a Terrestrial Trunked Radio (TETRA) transceiver, a WiMAX transceiver perhaps operating in accordance with an IEEE 802:16 standard, and/or other similar type of wireless transceiver configurable to communicate via a wireless network for infrastructure communications. Communications unit 202 may also include wired interface, for example, an interface for a wired Ethernet or USB connection. Communications unit 202 may also include one or more local area network or personal area network transceivers such as Wi-Fi transceiver perhaps operating in accordance with an IEEE 802.11 standard (e.g., 802.11a, 802.11b, 802.11g), or a Bluetooth transceiver. The transceivers may be coupled to a combined modulator/demodulator 210 that is coupled to the encoder/decoder 211.

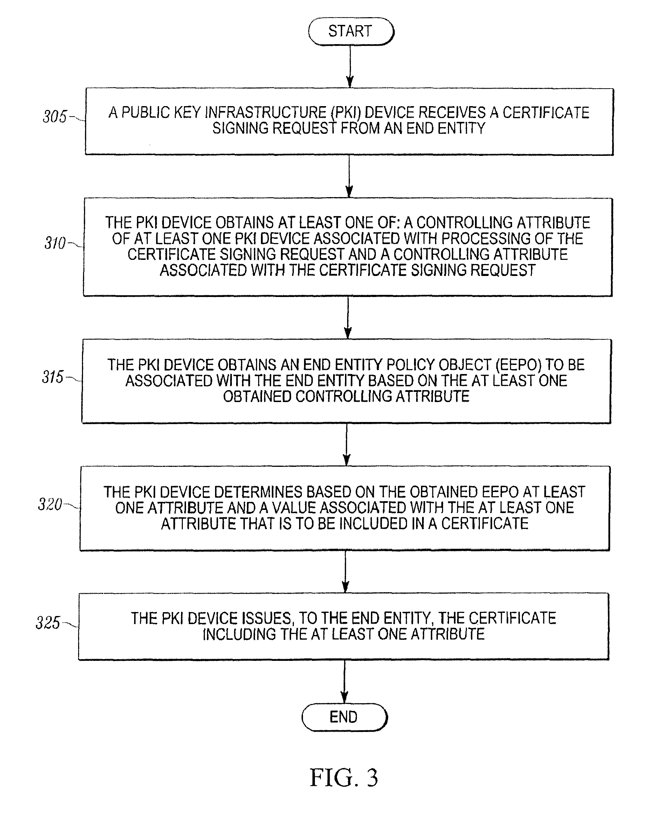

The one or more memory devices 204, 212, 214, 216 store code for decoding or encoding data such as control, request, or instruction messages, channel change messages, and/or data or voice messages that may be transmitted or received by device 200 and other programs and instructions that, when executed by the processor 203, provide for the device 200 (for example, provisioning device 104, RA 106 or CA 110) to perform a set of functions and operations described herein as being performed by such a device, such as the implementation of the encoder/decoder 211 and one or more of the steps set forth in FIG. 3.

FIG. 3 is a flowchart of a method for automating selection of certificate management policies when issuing a certificate in accordance with some embodiments. At 305, a PKI device receives a certificate signing request from an end entity. At 310, the PKI device obtains at least one of: a controlling attribute of at least one PKI device associated with processing of the certificate signing request and a controlling attribute associated with the certificate signing request. At 315, the PKI device obtains an end entity policy object (EEPO) to be associated with the end entity based on the at least one obtained controlling attribute. At 320, the PKI device determines, based on the obtained EEPO, at least one attribute and a value associated with the at least one attribute that is to be included in a certificate. At 325, the PKI device issues; to the end entity, the certificate including the at least one attribute.

In the foregoing specification, specific embodiments have been described. However, one of ordinary skill in the art appreciates that various modifications and changes can be made without departing from the scope of the invention as set forth in the claims below. Accordingly, the specification and figures are to be regarded in an illustrative rather than a restrictive sense, and all such modifications are intended to be included within the scope of present teachings.

The benefits, advantages, solutions to problems, and any element(s) that may cause any benefit, advantage, or solution to occur or become more pronounced are not to be construed as a critical, required, or essential features or elements of any or all the claims. The invention is defined solely by the appended claims including any amendments made during the pendency of this application and all equivalents of those claims as issued.

Moreover in this document, relational terms such as first and second, top and bottom, and the like may be used solely to distinguish one entity or action from another entity or action without necessarily requiring or implying any actual such relationship or order between such entities or actions. The terms "comprises," "comprising," "has", "having," "includes", "including," "contains", "containing" or any other variation thereof, are intended to cover a non-exclusive inclusion, such that a process, method, article, or apparatus that comprises, has, includes, contains a list of elements does not include only those elements but may include other elements not expressly listed or inherent to such process, method, article, or apparatus. An element proceeded by "comprises ... a", "has ... a", "includes ... a", "contains ... a" does not, without more constraints, preclude the existence of additional identical elements in the process, method, article, or apparatus that comprises, has, includes, contains the element. The terms "a" and "an" are defined as one or more unless explicitly stated otherwise herein. The terms "substantially", "essentially", "approximately", "about" or any other version thereof, are defined as being close to as understood by one of ordinary skill in the art, and in one non-limiting embodiment the term is defined to be within 10%, in another embodiment within 5%, in another embodiment within 1% and in another embodiment within 0.5%. The term "coupled" as used herein is defined as connected, although not necessarily directly arid not necessarily mechanically. A device or structure that is "configured" in a certain way is configured in at least that way, but may also be configured in ways that are not listed.

It will be appreciated that some embodiments may be comprised of one or more generic or specialized processors (or "processing devices") such as microprocessors, digital signal processors, customized processors and field programmable gate arrays (FPGAs) and unique stored program instructions (including both software and firmware) that control the one or more processors to implement, in conjunction with certain non-processor circuits, some, most, or all of the functions of the method and/or apparatus described herein. Alternatively, some or all functions could be implemented by a state machine that has no stored program instructions, or in one or more application specific integrated circuits (ASICs), in which each function or some combinations of certain of the functions are implemented as custom logic. Of course, a combination of the two approaches could be used.

Moreover, an embodiment can be implemented as a computer-readable storage medium having computer readable code stored thereon for programming a computer (e.g., comprising a processor) to perform a method as described and claimed herein. Examples of such computer-readable storage mediums include, but are not limited to, a hard disk, a CD-ROM, an optical storage device, a magnetic storage device, a ROM (Read Only Memory), a PROM (Programmable Read Only Memory), an EPROM (Erasable Programmable Read Only Memory), an EEPROM (Electrically Erasable Programmable Read Only Memory) and a Flash memory. Further, it is expected that one of ordinary skill, notwithstanding possibly significant effort and many design choices motivated by, for example, available time, current technology, and economic considerations, when guided by the concepts and principles disclosed herein will be readily capable of generating such software instructions and programs and ICs with minimal experimentation.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separately claimed subject matter.

## Claims

1. A method comprising;
receiving, by a Public Key Infrastructure (PKI) device, a certificate signing request from an end entity;
obtaining, by the PKI device, at least one of:
a controlling attribute of at least one PKI device associated with processing of the certificate signing request; and
a controlling attribute associated with the certificate signing request;
obtaining, by the PKI device, an end entity policy object (EEPO) to be associated with the end entity based on at least one obtained controlling attribute;
determining, by the PKI device and based on an obtained EEPO, at least one attribute and at least one value associated with the at least one attribute that is to be included in a certificate; and
issuing, by the PKI device to the end entity, the certificate including the at least one attribute.

2. The method of claim 1, wherein the at least one attribute includes at least one of the at least one obtained controlling attribute and a second attribute.

3. The method of claim 1, wherein obtaining at least one controlling attribute comprises obtaining at least one controlling attribute in at least one certificate issued to at least one PKI device associated with processing of the certificate signing request,
wherein the at least one PKI device associated with processing of the certificate signing request includes at least one of a current PKI device associated with current processing of the certificate signing request, a predecessor PKI device associated with a previous processing of the certificate signing request, and a future PKI device associated with subsequent processing of the certificate signing request.

4. The method of claim 1, wherein the EEPO includes parameters for indicating to a subject of the certificate at least one of:
how and when the certificate is to be at least one of used, renewed, rekeyed, revoked, and destroyed; and
at least one certificate that may be accepted from another end entity.

5. The method of claim 1, wherein the EEPO is forwarded to the end entity and is used by the end entity in managing the certificate throughout a lifecycle of the certificate.

6. The method of claim 1, wherein obtaining the EEPO comprises accessing at least one data structure, wherein the accessing is performed using at least one of the at least one obtained controlling attribute and another attribute.

7. The method of claim 1, wherein the at least one obtained controlling attribute associated with the certificate signing request identifies at least one of a certificate policy object identifier and a private certificate extension, wherein the private certificate extension identifies at least one of an end entity type, a service type, and a provisioning device type.

8. The method of claim 1, wherein obtaining the EEPO comprises assigning the EEPO to the end entity based on at least one of:
an assurance level of the end entity; and
an assurance level of the PKI device.

9. The method of claim 1, wherein the PKI device comprises one or more of a certificate authority device, a registration authority device, and a provisioning device.

10. The method of claim 1, wherein obtaining the EEPO comprises determining which of the at least one controlling attribute associated with the certificate signing request to consider along with at least one of:
a controlling attribute in a certificate for which the PKI device is a subject; and
an EEPO issued to the PKI device.

11. A Public Key Infrastructure (PKI) apparatus comprising:
an end entity configured to generate and transmit a certificate signing request;
at least one PKI device configured to receive the certificate signing request, the at least one PKI device comprising a certificate policy engine that is configured to:
obtain at least one of:
a controlling attribute of the at least one PKI device associated with processing of the certificate signing request; and
a controlling attribute associated with the certificate signing request;
obtain an end entity policy object (EEPO) to be associated with the end entity based on at least one obtained controlling attribute;
determine, based on an obtained EEPO, at least one attribute and at least one value associated with the at least attribute that is to be included in a certificate; and
issue to the end entity, the certificate including the at least one attribute.

12. The PKI apparatus of claim 11, wherein the at least one PKI device comprises at least one of a provisioning device and a registration device and wherein the at least one of the provisioning device and the registration device is configured to establish a trust relationship with the end entity and with another PKI device.

13. The PKI apparatus of claim 12, wherein the at least one PKI device comprises the provisioning device and wherein the provisioning device is configured to:
receive the certificate signing request from the end entity;
sign the certificate signing request;
return the signed certificate signing request to the end entity; and
wherein the end entity is configured to send the signed certificate signing request to the registration device.

14. The PKI apparatus of claim 12, wherein the at least one PKI device comprises at least one of a current PKI device, a predecessor PKI device, and a future PKI device.

15. A Public Key Infrastructure (PKI) device comprising:
a memory;
a transceiver configured to receive a certificate signing request from an end entity;
a processor configured to implement a certificate policy engine that performs a set of functions including:
obtaining at least one of:
a controlling attribute of at least one PKI device associated with processing of the certificate signing request; and
a controlling attribute associated with the certificate signing request;
obtaining an end entity policy object (EEPO) to be associated with the end entity based on at least one obtained controlling attribute;
determining, based on an obtained EEPO, at least one attribute and at least one value associated with the at least one attribute that is to be included in a certificate; and
issuing, to the end entity, the certificate including the at least one attribute.

16. The PKI device of claim 14, wherein the certificate policy engine is configured to perform functions including:
determining contents of the certificate in response to receiving the certificate signing request and wherein, in determining the contents of the certificate, the certificate policy engine selects the EEPO.

17. The PKI device of claim 14, wherein the EEPO comprises parameters for indicating to a subject of the certificate at least one of:
how and when the certificate is to be at least one of used, renewed, rekeyed, revoked, and destroyed; and
at least one certificate that may be accepted from another end entity.

18. The PKI device of claim 14, wherein the certificate policy engine is configured to obtain the EEPO by accessing at least one data structure, wherein the accessing is performed using at least one of the at least one obtained controlling attribute and another attribute.

19. The PKI device of claim 14, wherein the certificate policy engine is configured to perform assigning the EEPO based on one or more of:
an assurance level of the end entity; and
an assurance level of the PKI device.

20. The PKI device of claim 14, wherein the certificate policy engine is configured to perform functions including:
determining, based on the EEPO, population of certificate attributes and corresponding certificate attribute values in the certificate;
determining, based on contents of the certificate, one or more of certificate use, cryptographic characteristics, duration, and constraints.
